# FASCICULE DE BREVET EUROPEEN

(11) **EP 2 227 652 B1**
(45) Date de publication et mention de la délivrance du brevet: **16.03.2016**
(21) Numéro de dépôt: 08865428.0
(22) Date de dépôt: 15.12.2008
(51) Int. Cl.: F21S 11/00, C09K 11/00, E04B 5/00, E04C 2/00, G02B 5/18, G02F 2/02, E06B 7/00, E04C 2/54

(54) **DISPOSITIF POUR BATIMENT COMPRENANT UN MATERIAU DE CONVERSION DE LUMIERE, PAR EXEMPLE DE L'ULTRA-VIOLET A LA LUMIERE VISIBLE**
VORRICHTUNG FÜR GEBAÜDE, MIT EINEM LICHTKONVERSIONSMATERIAL, Z.B. VOM U.V. ZUM SICHTBAREN LICHT
DEVICE FOR A BUILDING, COMPRISING A LIGHT CONVERSION MATERIAL, E.G. FOR CONVERTING ULTRAVIOLET LIGHT INTO VISIBLE LIGHT

(30) Priorité: 20.12.2007 FR 0760077
(43) Date de publication de la demande: 15.09.2010
(73) Titulaire: Saint-Gobain Glass France, 92400 Courbevoie (FR)
(72) Inventeur: HUIGNARD, Arnaud, F-60200 Compiègne (FR); VERMERSCH, François-Julien, F-75014 Paris (FR)
(74) Mandataire: Colombier, Christian
(86) Numéro de dépôt international: PCT/FR2008/052303
(87) Numéro de publication internationale: WO 2009/081014

(56) Documents cités:
- WO-A-89/09250
- AU-A1- 2003 201 296
- DE-A1- 10 024 891
- DE-A1- 19 945 186
- DE-A1-102005 061 854
- FR-A- 2 856 512
- FR-A1- 2 846 663
- JP-A- 2007 239 438
- US-A- 4 989 952
- US-A- 5 009 484
- US-A- 5 709 456
- US-A- 6 059 438
- US-A1- 2007 133 105

## Description

L'invention concerne le domaine des dispositifs pour bâtiment comprenant des éléments capables de rediriger la lumière venant de l'extérieur dans une direction souhaitée à l'intérieur, généralement le plafond. Ce type de dispositif est généralement qualifié de « Daylighting » lorsque c'est la lumière solaire visible que l'on cherche à dévier.

Ce type de dispositif est généralement considéré comme contribuant à économiser l'énergie du fait de l'utilisation plus efficace en intérieur de lumière extérieure, ce qui permet de réduire l'éclairage artificiel.

De nombreux systèmes de déviation de la lumière ont été décrits. Le plus courant est celui utilisant des lamelles réfléchissantes, comme par exemple décrit dans EP878661. Le EP964112 enseigne la découpe laser d'un vitrage afin de générer des fissures horizontales dans le vitrage, lesdites fissures jouant un rôle miroir pour les rayons lumineux venant de l'extérieur. Le US5009484 enseigne un vitrage comprenant en surface un réseau de diffraction constitué de traits parallèles en relief. La lumière est séparée en différentes composantes et déviée et reconstituée au plafond.

Le US 5709456 enseigne un concentrateur de lumière traversant une paroi. Ce concentrateur contient plusieurs transformateurs de lumière de façon à nuancer la couleur émergente. La tonalité de la lumière est ajustée sans chercher à augmenter son intensité. Ce système comprend des luminophore transformant le visible. La lumière visible émergente de ce système et traversant l'ouverture ne peut pas être plus intense que la lumière incidente.

Le DE102005061854 enseigne un élément de façade contenant un luminophore, ledit élément étant placé à proximité d'une fenêtre. Cet élément n'est pas placé lui-même dans une ouverture de mur. Il ne contient par ailleurs aucun moyen de déviation de la lumière le traversant.

Le US7329983 enseigne une matrice solide contenant des particules luminophore dispersées.

Le US4989952 enseigne un système de déviation de la lumière placé dans une ouverture de mur.

Les inventeurs ont maintenant trouvé la possibilité de dévier la lumière tout en la transformant pour la rendre plus intense dans le visible. En effet, le système de déviation de la lumière constitue un support auquel il est possible de combiner un matériau capable de convertir de la lumière non-visible en lumière visible. A la lumière originellement déjà dans le visible vient donc s'ajouter de la lumière qui n'était pas visible mais qui l'est devenue sous l'effet d'un matériau l'ayant convertie. Des matériaux ayant cette faculté de conversion ont déjà été décrits, mais ils n'ont jamais été utilisés dans un système du type daylighting. On distingue généralement les matériaux dits d' « up-conversion » pour transformer de l'IR vers le visible, et les matériaux dits de « down-conversion » pour transformer de l'UV vers le visible. Des composés du type « up-conversion » et « down-conversion » peuvent être combinés au sein du même matériau.

L'invention concerne en premier lieu un équipement d'ouverture dans un mur, ledit équipement comprenant un moyen de déviation déviant la lumière traversant ledit équipement et ladite ouverture (la lumière arrivant d'un côté de l'ouverture et la traversant en passant par l'équipement), ledit équipement comprenant un matériau de conversion de l'énergie lumineuse la rendant plus intense dans le visible de l'autre côté de l'ouverture. De la sorte, la lumière émergente de l'équipement est plus intense dans le visible que la lumière incidente. Selon l'invention, cette lumière émergente est dirigée par l'équipement selon l'invention vers le plafond de l'intérieur d'un bâtiment (une pièce d'habitation, un bureau ou un local de n'importe quelle nature). L'originalité de la présente invention réside dans l'utilisation d'un matériau de conversion de l'énergie lumineuse intensifiant celle-ci dans le visible, en association avec un moyen de déviation de la lumière. Ainsi, selon l'invention, la lumière visible émergente de l'équipement est plus intense que la lumière visible incidente vers l'équipement. Il s'agit bien ici des rayons lumineux qui traversent à la fois l'équipement et l'ouverture.

Le mur est généralement une limite de bâtiment (local de toute nature : habitation, bureau, hangar, etc) mais peut aussi se situer à l'intérieur d'un bâtiment. Le terme « mur » est donc à prendre dans un sens large et recouvre notamment le terme « cloison ». Le mur fait généralement un angle (généralement un angle droit) dans sa partie supérieure avec un plafond. L'équipement selon l'invention est avantageusement utilisé pour renvoyer la lumière vers le plafond.

L'ouverture est toute ouverture pouvant laisser passer la lumière et peut être une fenêtre, une porte, une porte-fenêtre. Le terme « ouverture » se rapporte surtout à la faculté de la lumière de pouvoir passer à travers elle et ne signifie pas nécessairement que des objets ou personnes physiques peuvent passer à travers elle. Notamment, l'ouverture peut être un vitrage scellé dans le mur sans aucune possibilité d'être ouvert dans un but d'aération par exemple.

L'invention concerne également un bâtiment comprenant une ouverture équipée d'un équipement selon l'invention. L'invention concerne également un procédé pour dévier la lumière traversant une ouverture de mur, ladite ouverture étant munie d'un équipement selon l'invention, la lumière étant généralement déviée par ledit équipement vers le plafond de l'intérieur d'un bâtiment.

L'équipement selon l'invention comprend généralement un vitrage comprenant au moins une feuille transparente, ladite feuille pouvant notamment être en verre ou en céramique ou en plastique (à base de polymère). Selon différents modes de l'invention, le vitrage peut comprendre le matériau de conversion de la lumière (en revêtement ou dans toute sa masse), ou peut comprendre le moyen de déviation de la lumière (sous la forme d'interfaces entre différents morceaux du vitrage, ou sous la forme d'un réseau de diffraction à sa surface, ou en comprenant deux feuilles de verre placées de part et d'autre d'un store vénitien de sorte que le vitrage inclut le store vénitien), ou peut comprendre à la fois le matériau de conversion de la lumière et le moyen de déviation de la lumière.

Le matériau de conversion de la lumière peut être placé sous la forme d'un revêtement à la surface d'une feuille de verre faisant partie d'un vitrage. La lumière traversant le vitrage est ainsi plus intense dans le visible. Elle peut être déviée avant ou après d'être convertie, selon le moyen de déviation utilisé.

Le matériau de conversion peut être opaque ou transparent. S'il est opaque, la lumière est convertie en réflexion sur ledit matériau. S'il est transparent, la lumière est convertie en transmission à travers ledit matériau et/ou en réflexion sur ledit matériau.

L'équipement selon l'invention peut comprendre un store vénitien en tant que moyen de déviation de la lumière, ledit store vénitien comprenant des lamelles horizontales parallèles, orientables pour dévier la lumière par réflexion sur elles, lesdites lamelles comprenant au moins à leur surface le matériau de conversion. Les lamelles peuvent comprendre le matériau de conversion dans toute leur masse, ou simplement à leur surface dans un revêtement. Ce store vénitien peut être placé d'un côté de l'ouverture, équipée ou non d'un vitrage, ou à l'intérieur d'un vitrage isolant entre les deux feuilles de verre le constituant. Dans ce cas, la déviation et la conversion de la lumière sont réalisées simultanément et par les mêmes surfaces (celles des lamelles).

Si l'équipement selon l'invention comprend un vitrage comprenant au moins une feuille de verre, le matériau de conversion peut être placé dans le vitrage lui-même ou à sa surface, dès lors qu'il est suffisamment transparent. Le matériau de conversion, s'il est suffisamment transparent, peut même constituer l'intégralité du vitrage lui-même. A titre d'exemple, pour ce cas précis, le vitrage peut-être une feuille de verre ou de vitrocéramique comprenant le moyen de conversion. Au sein de l'équipement selon l'invention, le vitrage est associé à un moyen de déviation de la lumière. Ce moyen peut être un store vénitien classique (démuni lui-même de matériau de conversion) placé d'un côté ou de l'autre du vitrage. Ici également, le store vénitien peut être placé à l'intérieur d'un vitrage isolant entre les deux feuilles de verre le constituant, au moins l'une des deux feuilles de verre comprenant le matériau de conversion. Avec un vitrage simple (une seule feuille de verre) ou un vitrage isolant (deux feuilles de verre emprisonnant une lame d'air), suivant la place du store vénitien sur le trajet de la lumière, la lumière peut être déviée avant ou après la conversion. On peut donc placer le store avant ou après une feuille de verre comprenant le matériau de conversion de la lumière. On peut avoir à la fois un vitrage comprenant le matériau de conversion de la lumière et le store vénitien comprenant aussi le matériau de conversion de lumière (en surface ou dans toute la masse des lamelles).

Ainsi, selon l'invention la lumière peut atteindre le matériau de conversion de l'énergie lumineuse avant d'atteindre le moyen de déviation.

Le moyen de déviation de la lumière peut être un réseau de diffraction, notamment du type de celui enseigné par le US5009484 ou comme ceux faisant l'objet des demandes de brevet français n° 0754877 et 0754878 déposées toutes deux le 4 mai 2007, placé sur une face principale du vitrage. Dans ce cas, de préférence, on place sur le trajet de la lumière d'abord le matériau de conversion, puis le réseau destiné à dévier la lumière. En effet, comme les paramètres du réseau sont en étroite relation avec la longueur d'onde de la lumière déviée, il est préférable de placer le maximum de lumière dans la bonne gamme de longueur d'onde (domaine du visible), avant de procéder à la déviation. En effet, la lumière IR et/ou UV convertie sera mieux déviée que la lumière IR et/ou UV non convertie puisque les paramètres du réseau sont choisis pour convertir la lumière visible. Un tel vitrage comprend donc généralement une feuille en verre (généralement minéral) supportant sur une de ses faces principales une couche de matériau de conversion et sur l'autre de ses faces principales le réseau déviant la lumière. Le vitrage est placé dans l'ouverture de mur, avec le matériau de conversion placé du côté de la lumière incidente. Le vitrage peut donc être tel que le matériau de conversion est placé sur la face extérieure de la feuille de verre et en ce que le réseau de diffraction est placé sur la face intérieure (par rapport à un local) de la même feuille de verre. Le vitrage peut également être du type isolant et comprenant notamment deux feuilles de verre. Dans ce cas, l'une des feuilles peut être munie des deux moyens (conversion et déviation) comme il vient d'être dit pour un vitrage simple, ou chaque feuille de verre pouvant comprendre l'un des deux moyens étant entendu que la feuille comprenant le matériau de conversion est placée du côté de la lumière incidente par rapport au moyen de déviation. Ainsi, le vitrage peut comprendre plusieurs feuilles de verre parallèles dont une première comprend le matériau de conversion et dont une seconde comprend le réseau de diffraction, la première étant placée avant la seconde sur le trajet de la lumière.

L'équipement selon l'invention présente généralement un plan général de constitution (dit « plan de l'équipement »), ledit plan étant destiné à être parallèle ou se confondre avec le plan du mur qui en sera équipé.

La déviation selon l'invention est généralement du type réflexion ou diffraction.

Au sens de l'invention, un rayon formant un angle avec le plan de l'équipement inférieur à +90° est dévié de sorte que l'angle formé entre ledit rayon incident (d'un côté de l'équipement) et le rayon émergent correspondant (de l'autre côté de l'équipement) est inférieur à +180°. On convient bien entendu que les deux angles qui viennent d'être donnés sont comptés positivement dans le même sens en partant du rayon incident.

La déviation au sens de l'invention n'est donc pas seulement la conséquence d'un phénomène du type réfraction car dans une réfraction l'angle formé entre le rayon incident et le rayon émergent est supérieur à +180°. Bien entendu, selon les interfaces traversés, il peut y avoir des phénomènes de réfraction sur le chemin de la lumière traversant l'équipement, mais la déviation au sens de l'invention ne peut pas uniquement reposer sur un phénomène de réfraction.

Selon l'équipement et selon l'angle d'incidence, certains rayons peuvent traverser l'équipement sans être déviés.

L'invention concerne donc un équipement d'ouverture dans un mur, ledit équipement comprenant un moyen de déviation déviant des rayons lumineux arrivant d'un côté de l'ouverture et la traversant, ledit équipement comprenant un matériau de conversion de l'énergie lumineuse la rendant plus intense dans le visible de l'autre côté de l'ouverture, l'angle formé entre lesdits rayons incidents et les rayons émergents correspondants étant inférieur à +180°.

Un réseau de diffraction adapté à la déviation de la lumière peut généralement être réalisé par les techniques suivantes : embossage, photolithographie, transfert, échange ionique, effet photoréfractif ou électrooptique. Un premier procédé comprend l'embossage d'une couche sol-gel ou polymère rapportée sur une feuille transparente (substrat), notamment en verre. L'embossage est une déformation plastique ou viscoplastique réalisée par contact avec un élément structuré, consistant en un rouleau par exemple, et sur lequel est simultanément exercée une pression. Les couches sol-gel utilisables sont par exemple constituées de silice (SiO₂), d'oxyde de titane (TiO₂), d'oxyde d'alumine (Al₂O₃) et déposées à partir de précurseurs liquides. Ces couches durcissent en séchant, avec ou sans moyen auxiliaire de chauffage (traitement UV par exemple). Citons comme précurseur de SiO₂ le tétraéthoxysilane (TEOS) ou le méthyltriéthoxysilane (MTEOS). Des fonctions organiques ou des particules minérales peuvent être incluses dans la solution de dépôt et ainsi être insérées dans le matériau final. A titre d'exemple, des silanes fluorés ont été décrits dans le EP799873 pour obtenir un revêtement hydrophobe. L'embossage peut aussi être réalisé sur des couches polymères comme
le polyéthylène téréphtalate (PET),
le polystyrène,
les polyacrylates tels que poly(méthacrylate de méthyle), poly(acrylate de butyle), poly(acide méthacrylique), poly(méthacrylate de 2-hydroxyéthyle) et leur copolymères,
les polyépoxy(méth)acrylates,
les polyuréthane(méth)acrylates,
les polyimides tels que polyméthylglutarimide,
les polysiloxanes tels que polyépoxysiloxanes,
les poly (éthers vinyliques),
les polybisbenzocyclobutènes ...
seuls ou en copolymères ou mélanges de plusieurs d'entre eux.

L'embossage peut être suivi dans certains cas d'une gravure. La couche sol-gel ou polymère embossée peut y être attaquée jusqu'à réapparition du matériau de la feuille transparente sous-jacente, en premier lieu dans les parties profondes desdits motifs en relief, puis progressivement jusque dans leurs parties hautes. Ainsi la surface structurée obtenue à la fin de la gravure peut être formée entièrement dans la couche sol-gel ou polymère rapportée, ou en partie dans celle-ci et en partie dans ladite feuille transparente, ou encore entièrement dans cette dernière. Les conditions de la gravure doivent être réglées pour que cette surface qui en résulte présente des motifs en relief de dimensions satisfaisant la définition du dispositif de l'invention.

On peut citer comme procédés de gravure :
une gravure chimique, par un acide notamment,
une gravure ionique réactive (Reactive Ion (Beam) Etching = RI(B)E),
une gravure par plasma (Inductively Coupled Plasma = ICP),
une gravure par faisceau électronique (e-Beam),
une gravure par nanopantographie (faisceau d'ions collimaté).

Il est à remarquer que le procédé d'embossage permet le traitement rapide de relativement vastes surfaces, à un coût modéré.

Un autre procédé possible de fabrication de réseau déviant la lumière comprend une étape de photolithographie. Ce procédé consiste généralement à munir d'abord le substrat transparent d'une première couche dans laquelle pourront être formés lesdits motifs en relief. Cette première couche est comparable à la couche sol-gel ou polymère rapportée du procédé d'embossage. Elle peut d'ailleurs être de la même nature que celle-ci, notamment en silice. Dans une deuxième étape du procédé, on dépose une deuxième couche d'une résine photosensible. Celle-ci est durcie en des localisations définies, par exposition à un rayonnement ciblé. Ainsi est constitué un masque, au-dessus de la première couche à graver, après élimination des parties non durcies de la résine photosensible. Puis on grave, de la même manière que décrit ci-dessus relativement à l'étape facultative du procédé par embossage. D'éventuels résidus de la résine photosensible peuvent être éliminés.

Un autre procédé de fabrication de réseau déviant la lumière comprend le transfert d'une couche nanostructurée. Une couche en adhésion sur un premier support est mise en adhésion sur un second, de manière à constituer un dispositif selon l'invention. La couche peut être en matière plastique ou similaire.

Un autre procédé utilisable de fabrication de réseau déviant la lumière repose sur un échange ionique, par exemple d'ions Na⁺ par des Ag⁺ dans un verre minéral.

Enfin, on peut utiliser comme procédé de fabrication de réseau déviant la lumière, un effet photoréfractif, selon lequel une lumière modulée induit une modulation spatiale de l'indice de réfraction du matériau (exemple : cristal photoréfractif en titanate de baryum). On peut également utiliser un effet électrooptique selon lequel un champ électrique induit une modulation spatiale de l'indice de réfraction du matériau.

Il n'est pas exclu de combiner au sein du même matériau le réseau de diffraction de la lumière et le moyen de conversion de lumière. En particulier, si l'on choisit de réaliser le matériau pour constituer le réseau de diffraction par l'embossage d'une couche sol-gel ou polymère rapportée sur une feuille transparente, on peut introduire au préalable le matériau de conversion au sein dudit sol-gel ou polymère. Dans l'équipement selon l'invention, le matériau constituant le réseau de diffraction de lumière peut contenir également le matériau de conversion de la lumière.

Le matériau de conversion transforme de l'infra-rouge vers le visible ou de l'ultra-violet vers le visible (ce qui recouvre et/ou, c'est-à-dire que le matériau peut éventuellement réaliser ces deux types de conversion). Le matériau de conversion ne transforme pas la lumière visible incidente sur le plan chromatique. Le matériau de conversion transforme la lumière IR ou UV sur le plan chromatique, le cas échéant en favorisant légèrement une balance chromatique désirée (exemple : recherche de l'illuminant E, lumière généralement ressentie par l'être humain comme étant plus chaude).

Des matériaux de conversion sont connus en eux-même et l'objet de la présente demande concerne leur utilisation originale en Daylighting. On rappelle néanmoins ci-dessous un certain nombre de ces matériaux.

Dans le cas d'une conversion de l'ultraviolet vers le visible, le matériau de conversion comprend de préférence un composé luminophore tel que ceux décrits dans le US2006/0289832, à savoir par exemple :
Ca₁₀(PC₄)₆FCl :Sb,Mn
(Sr,Mg)₂P₂O₇:Eu
Sr₂P₂O₇:Eu
Sr₅(PO₄)₃Cl:Eu
(Sr,Ca,Ba)₅(PO₄)₃Cl:Eu
BaMg₂Al₁₆O₂₇:Eu
BaMg₂Al₁₆O₂₇:Eu,Mn
CaWO₄
CaWO₄:Pb
Ba₂P₂O₇:Ti
(Ba,Ca)₅(PO₄)₃Cl:Eu
Zn₂SiO₄ :Mn
Y₃Al₅O₁₂ :Ce
MgAl₁₁O₁₉ :Ce,Tb,Mn
LaPO₄ :Ce,Tb
Y(P,V)O₄ :Eu
3,5MgO.0,5MgF₂.GeO₂:Mn
(Sr,Mg)₃(PO₄)₂:Sn
Y₂O₃:Eu
CaSiO₃:Pb,Mn
BaSi₂O₅:Pb
(Ba,Sr,M₉)₃Si₂O₇:Pb
SrB₄O₇:Eu
YPO₄:Ce
LaPO₄:Ce
(Mg,Ba)Al₁₁O₁₉:Ce
LiAlO₂:Fe
ZnS:Ag,Cl
ZnS:Mn
ZnS:Ag,Al
ZnS:Cu,Al
ZnS:Cu,Au,Al
Y₂O₂S:Eu
ZnS :Ag+(Zn,Cd)S :Cu
ZnS:(Zn)
(KF,MgF₂):Mn
(Zn,Cd)S:Ag
(Zn,Cd)S:Cu
ZnO:Zn
(Zn,Cd)S:Cu,CI
ZnS:Cu
ZnS:Cu,Ag
MgF₂:Mn
(Zn,Mg)F₂:Mn
Zn₂SiO₄:Mn,As
Gd₂O₂S:Tb
Y₂O₂S:Tb
Y₃(Al,Ga)₅O₁₂:Ce
Y₂SiO₅:Ce
Y₃Al₅O₁₂:Tb
Y₃(Al,Ga)₅O₁₂:Tb
InBO₃:Tb
InB0₃:Eu
ZnS:Ag
Y₂SiO₅:Tb
(Zn,Cd)S :Cu,Cl+(Zn,Cd)S:Ag,Cl
InBO₃:Tb+InBO₃:Eu
ZnS:Ag+ZnS:Cu(ou ZnS:Cu,Au)+Y₂O₂S:Eu
InBO₃:Tb+InBC>3:Eu+ZnS :Ag
Gd₂O₂S:Eu
(Y,Sr)TaO₄
(Y,Sr)TaO₄:Gd
(Y,Sr)TaO₄:Nb
BaFCl:Eu
BaFBr:Eu
BaMgAl₁₀O₁₇:Eu
YBO₃:Tb
BaAl₁₂O₁₉:Mn
(Y,Gd)BO₃:Eu
YBO₃:Eu
Sr₄Al₁₄O₂₅:Eu,Dy
SrAl₂O₄:Eu,Dy
CaAl₂O₄:Eu,Nd
Y₂O₂S:Eu,Mg,Ti

Ces particules luminophores ou ces mélanges de particules luminophores se caractérisent par l'émission de rayonnements de longueurs d'ondes dans le domaine du visible, correspondant généralement à différentes couleurs. Les trois derniers cités de la liste ci-dessus sont remarquables par l'intensité, la persistance et la durée de leur activité, après que toute source d'excitation en a été éloignée, notamment la nuit.

Dans le cas d'une conversion de l'infrarouge vers le visible (« up-conversion »), le moyen de conversion de lumière comprend de préférence au moins un composé convertisseur de longueur d'onde, en particulier un ion d'une terre rare ou d'un métal de transition inséré dans une matrice minérale. Les matrices minérales présentent en effet des durabilités plus élevées que les matrices organiques. Les ions de terres rares (lanthanides) sont préférés car ils présentent des rendements de conversion élevés.

Les ions d'une terre rare ou d'un métal de transition sont de préférence choisis parmi les ions Yb³⁺, Tb³⁺, Tm³⁺, Eu³⁺, Eu²⁺, Er³⁺, Pr³⁺, Nd³⁺, Dy³⁺, Ho³⁺, Ti²⁺, Ni²⁺, Mo³⁺, Os⁴⁺, Re⁴⁺, Mn²⁺, Cr³⁺. Les couples formés par l'ion Yb³⁺ (qui absorbe pour des longueurs d'onde proches de 980 nm) avec Tb³⁺ ou Tm³⁺ ou Er³⁺ permettent par exemple d'obtenir de forts rendements de luminescence. Le couple d'ions Pr³⁺/Nd³⁺ est également intéressant. Dans le cas où un ion d'une seule nature est utilisé, les ions Pr³⁺ ou Er³⁺ sont préférés.

La matrice minérale peut être amorphe (il peut par exemple s'agir d'un verre), ou cristallisée. L'avantage de choisir une matrice amorphe est qu'elle peut contenir de grandes quantités d'ions. Les matrices cristallisées sont toutefois préférées car l'environnement des ions (et donc leur spectre d'émission / absorption) est parfaitement contrôlé. En outre, les matrices amorphes contiennent généralement plus de défauts structuraux, ce qui peut entraîner la création de niveaux énergétiques intermédiaires et faciliter ainsi les désexcitations par transferts non radiatifs (par exemple par émission de phonons) ou par transferts radiatifs, mais de faible énergie.

Dans le cas où la matrice est cristallisée, l'ion actif doit pouvoir s'insérer dans le réseau cristallin à la place d'un ion de la matrice. De ce fait, des matrices contenant des atomes d'Yttrium (Y), de Lanthane (La), de Gadolinium (Gd) ou de Lutétium (Lu) sont préférées, car il a été observé que les ions de terres rares pouvaient aisément se substituer à ces ions au sein d'un réseau cristallin.

La fréquence de phonons de la matrice cristalline est de préférence au moins quatre fois inférieure à la fréquence d'émission de manière à éviter les désexcitations par transferts non radiatifs. De ce fait, les matrices cristallines préférées sont choisies parmi les halogénures (notamment les fluorures, mais aussi les bromures ou les chlorures) ou les oxydes.

La matrice minérale est par exemple choisie parmi NaYF₄, Y₂O₃, Y₂SiO₅, LaPO₄, TeO₂, ou Y₃Al₅O₁₂ (YAG). La quantité d'ions dopants est généralement comprise entre 0,01 et 50% (en moles par rapport aux ions auxquels ils se substituent), plus particulièrement entre 5 et 50% lorsqu'il s'agit de Yb³⁺ et entre 0,01 et 10% pour les autres ions dopants précédemment cités.

Les composés convertisseurs de l'infrarouge vers le visible suivants se sont révélés particulièrement efficaces : TeO₂ dopé Pr³⁺/Nd³⁺, Y₂SiO₅ dopé Pr³⁺, Y₃Al₅O₁₂ dopé Er³⁺, CaF₂ dopé Yb³⁺/Tb³⁺, Y₂O₃ dopé Yb³⁺/Tb³⁺, NaYF₄ dopé Yb³⁺/Tb³⁺. Par « dopé », on entend que la matrice comprend les ions cités, sans nécessairement préjuger de la quantité d'ions présents, qui peut être relativement élevée, comme indiqué précédemment.

Le composé convertisseur de longueurs d'onde (de l'infrarouge vers le visible ou de l'ultraviolet vers le visible) peut être compris dans un substrat. Ce dernier peut ainsi être une vitrocéramique comprenant des cristaux et un liant amorphe, au moins une partie desdits cristaux constituant des composés convertisseurs de longueurs d'onde. A titre d'exemple, des vitrocéramiques à base de SiO₂/Al₂O₃/CaF₂ dans lesquelles des cristaux de CaF₂ se forment, lesquels cristaux insèrent dans leur structure cristalline des ions Yb³⁺ et Tb³⁺, sont ainsi capables d'absorber un rayonnement dont la longueur d'onde est de 980 nm pour réémettre un rayonnement visible.

Le composé convertisseur de longueurs d'onde (de l'infrarouge vers le visible ou de l'ultraviolet vers le visible) peut être compris dans un substrat du type verre. Ce verre peut être tout type de verre et comprend en plus un composé solubilisé du type Yb³⁺ et Er³⁺ (pour l'up conversion), Ce³⁺ (pour la down conversion).

Le composé convertisseur de longueurs d'onde peut être compris dans un revêtement. Ce revêtement est appelé dans la suite du texte « revêtement convertisseur de lumière ou de longueur d'onde ». Le composé convertisseur de longueurs d'onde peut être compris dans le revêtement sous forme de particules dispersées dans un liant minéral ou organique. Ces particules sont de préférence de taille inférieure à 500 nm, notamment 300 nm et même 200 nm ou 100 nm de manière à ne pas générer de diffusions parasites susceptibles d'affecter la transparence du matériau, si celle-ci est importante. La diffusion peut également être évitée en choisissant un liant dont l'indice de réfraction est égal à celui des particules. La quantité de particules du composé convertisseur d'énergie au sein du liant est au moins égale à 1% (en masse) et de préférence supérieure à 5%. L'épaisseur du revêtement est de préférence au moins égale à 100 nm, de préférence supérieure ou égale à 500 nm et même supérieure ou égale à 1 µm. Elle peut être inférieure ou égale à 10 µm, voire inférieure ou égale 5 µm.

Le liant organique peut être par exemple du type acrylique, époxy, cellulosique, ou encore silicone.

Le liant minéral peut être par exemple un liant en un matériau choisi parmi la silice (SiO₂), l'alumine (Al₂O₃), la zircone (ZrO₂) ou un de leurs mélanges. Ce liant peut notamment être obtenu par un procédé de décomposition de précurseurs organométalliques ou halogénures, par exemple procédé du type sol-gel, ou dépôt chimique en phase vapeur assisté par plasma et à pression atmosphérique (APPECVD). Le liant peut également être un émail ou une glaçure, obtenu par fusion d'une fritte de verre déposée par exemple par sérigraphie.

Le revêtement convertisseur de longueurs d'onde peut aussi être constitué d'un composé convertisseur de longueurs d'onde. Contrairement au mode de réalisation précédemment décrit, dans lequel des particules actives étaient dispersées dans un liant, le composé convertisseur de longueurs d'onde forme en lui-même le revêtement.

Diverses techniques sont possibles pour déposer ce revêtement : des techniques de dépôt chimique en phase vapeur (CVD), en particulier assistées par plasma et à pression atmosphérique, des techniques du type sol-gel, ou des techniques de dépôt physique en phase vapeur, par exemple par pulvérisation cathodique, notamment assistée par champ magnétique (procédé magnétron), ou par évaporation. Le revêtement, lorsque le composé convertisseur de longueurs d'onde comprend une matrice minérale amorphe, peut aussi être un émail ou une glaçure obtenu par fusion d'une fritte de verre déposée par exemple par sérigraphie.

Si l'équipement selon l'invention comprend un vitrage comprenant une feuille transparente, notamment en verre ou en vitrocéramique, on peut réaliser la déviation de la lumière à l'aide d'interfaces dans ladite feuille. On peut par exemple réaliser des fissures ou découpes horizontalement dans la feuille, comme décrit dans le EP964112. On peut considérer que la feuille comprend alors différents morceaux de verre ou de vitrocéramique empilés les uns sur les autres. Le moyen de déviation est alors constitué par des interfaces parallèles (horizontaux une fois monté dans l'ouverture) séparant différents morceaux de la feuille transparente. Les interfaces jouent un rôle miroir et dévient la lumière par réflexion.

Si l'équipement selon l'invention comprend un vitrage comprenant une feuille, notamment en verre ou en vitrocéramique, on peut doter le vitrage d'une couche à action photocatalytique du côté où la lumière émerge dudit vitrage. Les couches à action photocatalytique sont connues comme ayant des propriétés anti-bactériennes et anti-salissure. Elles sont généralement basées sur l'action photocatalytique de l'oxyde de titane. Elles sont bien connues de l'homme du métier et l'on ne reviendra pas ici sur leur procédé de préparation. Le vitrage selon l'invention comprend déjà un matériau de conversion de l'énergie lumineuse intensifiant celle-ci dans le visible. Il est possible de choisir ce matériau de façon à ce qu'il intensifie aussi l'ultra-violet, ou, de lui adjoindre un autre composé de conversion de l'énergie lumineuse intensifiant celle-ci aussi dans l'ultra-violet. Ainsi, le matériau convertisseur de lumière peut par exemple comprendre deux composés différents, l'un intensifiant l'intensité dans le visible, l'autre intensifiant l'intensité dans l'UV. Le matériau convertisseur ayant ces deux fonctions peut être inclus dans un seul revêtement, par exemple par mélange de particules. La couche à action photocatalytique est située du côté du vitrage où la lumière émerge. Cette couche est en contact avec l'air ambiant. C'est donc la dernière couche traversée par la lumière. Généralement, cette couche est du côté de l'intérieur du bâtiment équipé par l'équipement selon l'invention.

On peut aussi ajouter de côté de la lumière incidente une couche antireflet.

Ces couches antireflet ou photocatalytiques ne sont pas en elles-même considérées comme étant des moyens de déviation de la lumière au sens de l'invention.

Dans les figures commentées ci-après, on a représenté le trajet de rayons lumineux à travers divers matériaux mais, par simplification, on n'a volontairement pas illustré l'effet de réfraction pouvant subir ces rayons quand ils passent d'un milieu à l'autre. Dans ces figures, les différents éléments de l'équipement ne sont pas à l'échelle les uns par rapport aux autres. Dans toutes les figures, le «plan de l'équipement » est vertical et perpendiculaire aux figures.

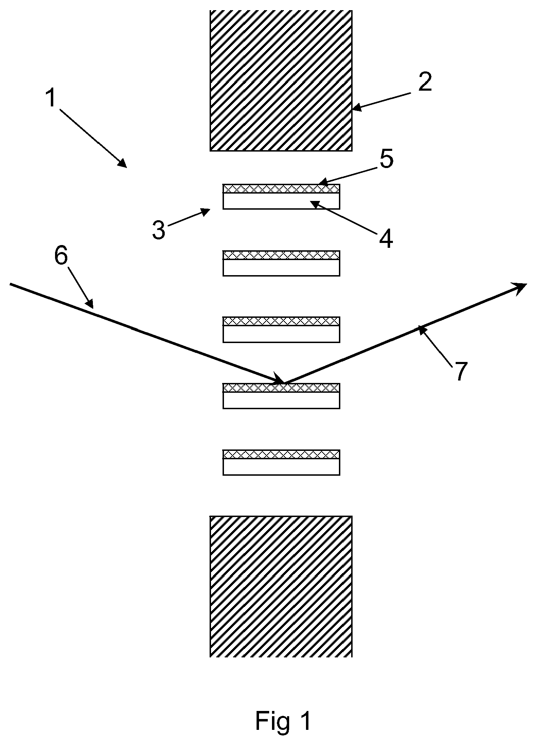

La figure 1 représente un mode de réalisation de l'invention selon lequel la lumière est déviée et convertie par des lamelles 3 (formant l'équipement selon l'invention). Ces lamelles 3 sont disposées sensiblement horizontalement, les unes en-dessous des autres dans une ouverture 1 d'un mur 2. Chaque lamelle est constituée d'un support 4 et d'un revêtement convertisseur de lumière sur la face supérieure du support 4. Ici, la lumière incidente 6 est déviée et convertie par les mêmes surfaces. La lumière émergente 7, traversant l'ouverture 1, est plus intense dans le visible qu'en l'absence de revêtement 5. Le revêtement 5 peut être opaque ou transparent. S'il est transparent, l'interface entre le support 4 et le revêtement 5 peut être du type miroir de façon à réfléchir au mieux la lumière. Les lamelles sont généralement orientables, par un système non représenté. L'ouverture pourrait être équipée d'un vitrage simple ou isolant, l'ensemble des lamelles étant disposé d'un côté ou de l'autre du vitrage (généralement du côté de la lumière émergente). L'ensemble des lamelles pourrait également être inséré dans un vitrage isolant entre les deux feuilles de verre dudit vitrage isolant. Le «plan de l'équipement » est vertical et perpendiculaire à la figure et se confond avec le mur 2.

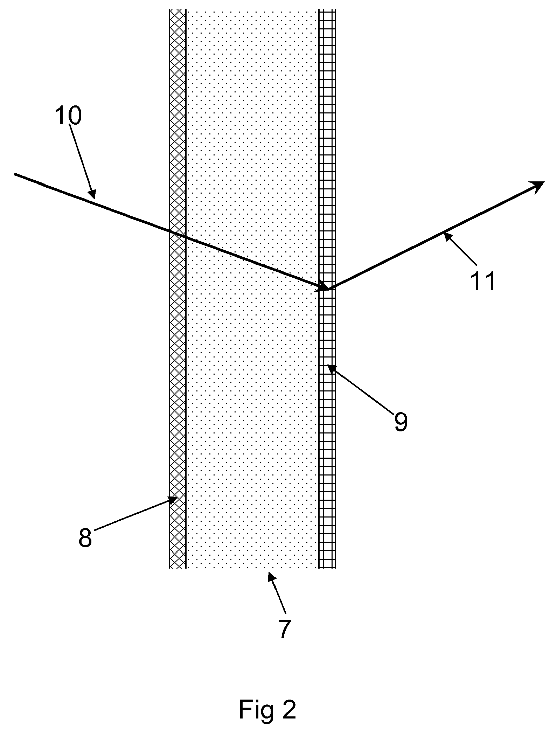

La figure 2 représente un vitrage comprenant un substrat 7 en verre minéral muni du côté de la lumière incidente 10 d'un revêtement 8 convertisseur de lumière et du côté de la lumière émergente 11 d'un revêtement 9 comprenant un réseau déviant la lumière.

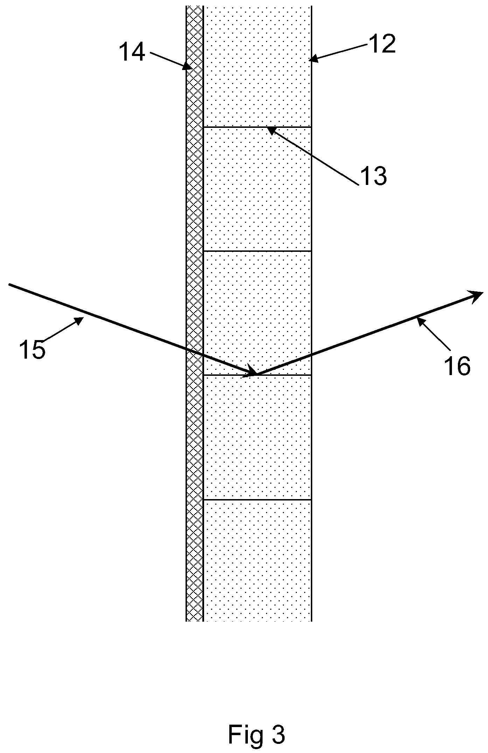

La figure 3 représente un vitrage 12 en verre minéral composé d'un assemblage de morceaux séparés par des interfaces 13 horizontales. Il peut s'agir de morceaux de verre prédécoupés et empilés les uns au-dessus des autres, ou d'une interface créée par rayon laser comme décrit dans le EP964112. Les interfaces 13 jouent un rôle miroir pour réfléchir la lumière vers le haut. Le vitrage comprend sur la face d'incidence de la lumière un revêtement transparent 14 de conversion de lumière. La lumière incidente 15 est d'abord convertie par le revêtement 14 puis réfléchie par les interfaces 13, et la lumière émergente 16 prend la direction du plafond.

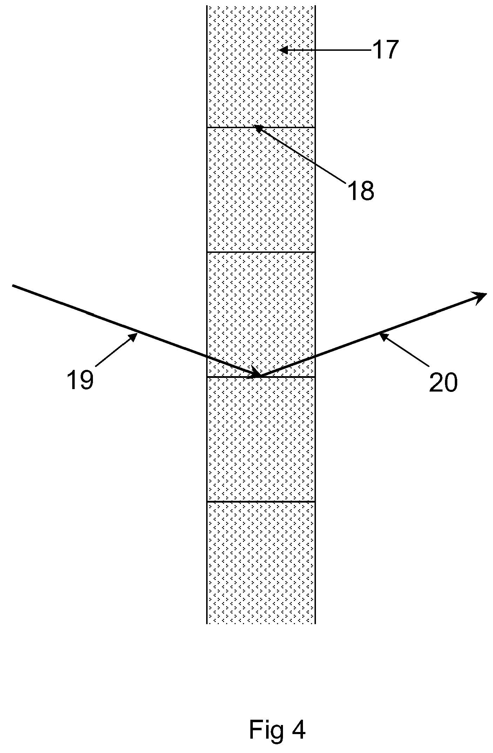

La figure 4 représente un vitrage en vitrocéramique contenant le matériau de conversion de lumière. Le vitrage est composé d'un assemblage de morceaux séparés par des interfaces 18 horizontales. Il peut s'agir de morceaux de vitrocéramique prédécoupés et empilés les uns au-dessus des autres, ou d'un interface créé par rayon laser comme décrit dans le EP964112. Les interfaces 18 jouent un rôle miroir pour réfléchir la lumière vers le haut. La lumière incidente 19 est convertie au cours de sa traversée de la vitrocéramique et réfléchie par les interfaces 18, et la lumière émergente 20 prend la direction du plafond.

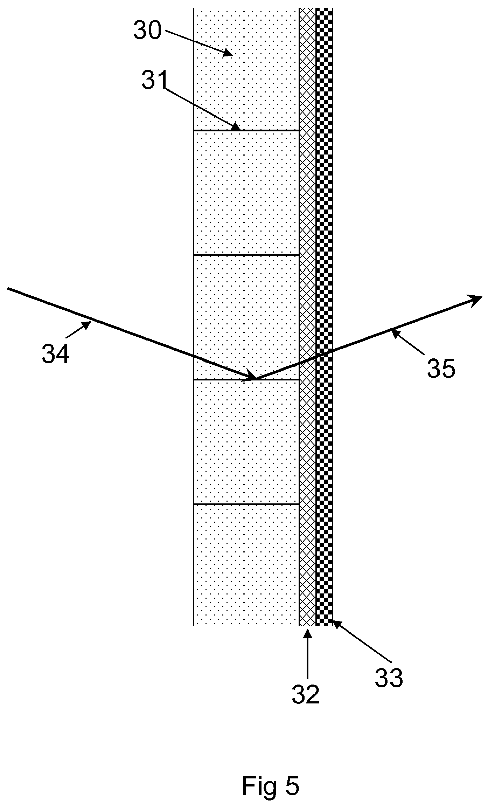

La figure 5 représente un vitrage 30 en verre minéral composé d'un assemblage de morceaux séparés par des interfaces 31 horizontales. Il peut s'agir de morceaux de verre prédécoupés et empilés les uns au-dessus des autres, ou d'une interface créée par rayon laser comme décrit dans le EP964112. Les interfaces 31 jouent un rôle miroir pour réfléchir la lumière vers le haut. Le vitrage comprend sur la face émergente de la lumière un revêtement transparent 32 de conversion de lumière, lui-même revêtu d'un revêtement photocatalytique 33. La lumière incidente 34 est d'abord réfléchie par les interfaces 34 puis convertie par le revêtement 32 puis, et la lumière émergente 35 prend la direction du plafond. Ici, le revêtement 32 contient au moins un composé du type « up-conversion » transformant de l'Infra-rouge en visible et un autre composé du type « up-conversion » augmentant la part d'UV de façon à activer la fonction photocatalytique du revêtement 33.

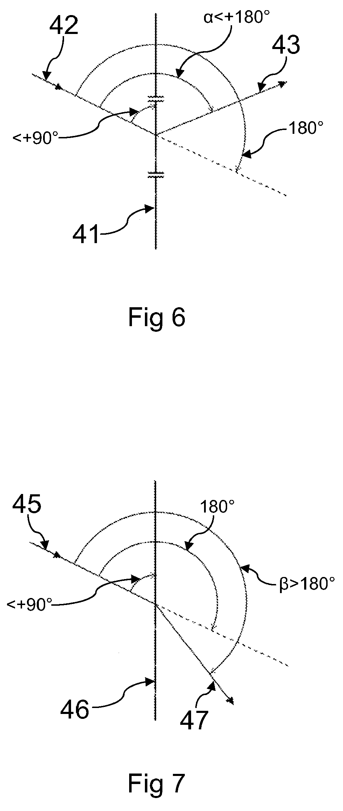

La figure 6 représente plus particulièrement ce que l'on entend par déviation au sens de l'invention. Un équipement 40 selon l'invention est incorporé dans une ouverture d'un mur 41. Un rayon incident 42 forme un angle avec l'équipement inférieur à +90°. Le rayon émergent 43 forme avec le rayon incident un angle alpha inférieur à +180°.

La figure 7 représente ce qui ne se produit pas dans le cadre de l'invention, c'est à-dire exclusivement un phénomène de réfraction. Un rayon incident 45 forme un angle inférieur à +90° avec un interface 46 et ressort en un rayon émergent 47. L'angle entre le rayon incident 45 et le rayon émergent 47 est supérieur à +180°.

### Exemple 1 : Film non transparent et convertissant de l'énergie ultraviolette en énergie visible.

Cet exemple décrit la préparation de couches luminescentes diffusantes. A 176 g d'eau déionisée on ajoute 12,8 g de particules d'alumine de diamètre moyen 500 nm et 0,24 g d'acide polyacrylique (solution à 50 % en poids dans l'eau). De la soude est ensuite ajoutée jusqu'à atteindre un pH de 10. On ajoute ensuite 5 g de particules LaPO₄:Ce,Tb de diamètre moyen 2 µm commercialisé par la société Nichia. Le mélange est ensuite homogénéisé dans une turbine pendant 5 minutes. On ajoute alors 11 g de silicate de lithium (solution à 30 % en poids dans l'eau). Après 5 minutes d'homogénéisation dans une turbine, le mélange est déposé sur les lamelles d'un vitrage daylighting tel que décrit sur la figure 1. On sèche thermiquement sous lampe IR (température du revêtement d'environ 80°C). Le revêtement obtenu présente une T_{L} de 60 % et un flou proche de 100 %. La partie ultraviolette du spectre solaire est alors absorbée et convertie en rayonnement visible, cette dernière étant redirigée vers l'intérieur du bâtiment.

### Exemple 2 : Film transparent et convertissant de l'énergie ultraviolette en énergie visible.

Les films luminescents transparents ont été élaborés de la façon suivante. A 4 ml de solution colloïdale de nanoparticules (diamètre des particules centré sur 30 nm) YVO₄:Eu concentrée est ajouté de 0,2 à 1 ml de silicate de lithium (30% massique dans l'eau, pH 12). Le sol obtenu est filtré (préfiltre en fibres de verre et filtre à 0,45µm) puis déposé par enduction (flow-coating) sur un vitrage tel que celui décrit sur la figure 2. Les films minces obtenus sont finalement recuits à 450°C pendant 12 heures. Le rôle de ce traitement thermique est de consolider mécaniquement le film et d'augmenter la luminescence (élimination de groupements hydroxyles qui inhibent la luminescence des ions europium). Les films minces après recuit sont parfaitement transparents et d'épaisseur comprise entre 0,2 et 0,7 µm. La partie ultraviolette du spectre solaire est alors absorbée et convertie en rayonnement visible, cette dernière étant redirigée vers l'intérieur du bâtiment.

### Exemple 3 : Email convertissant de l'énergie infrarouge en énergie visible.

Dans cet exemple, le composé convertisseur de longueurs d'onde est compris dans un revêtement de type émail. Des particules micrométriques d'oxyde d'yttrium (Y₂O₃) dopé avec 18% (en mole) d'ytterbium Yb³⁺ et 2% de terbium Tb³⁺ sont dispersées dans une fritte de verre à bas point de fusion (600°C) à base de silice et d'oxyde de bismuth. La pâte obtenue est déposée sur un substrat par sérigraphie sur un vitrage tel que celui décrit sur la figure 3, puis recuite pendant 6 minutes à une température de 680°C.
La partie infrarouge du spectre solaire est alors absorbée et convertie en rayonnement visible, cette dernière étant redirigée vers l'intérieur du bâtiment.

### Exemple 4 : Film transparent et convertissant de l'énergie infrarouge en énergie visible.

Cet exemple illustre un mode de réalisation selon lequel le composé convertisseur de longueurs d'onde est compris dans un revêtement en étant dispersé dans un liant de silice sol-gel. A 4 ml d'une solution colloïdale de nanoparticules de NaYF₄ : 20 mol% Yb³⁺, 2 mol% Er³⁺ est ajouté 1 ml d'un sol de silice sol-gel. Le diamètre des nanoparticules est de 30 nm ± 10 nm, la concentration massique de la solution colloïdale en nanoparticules étant de 10%. Le sol de silice sol-gel est obtenu par hydrolyse (durée = 4 heures) d'un mélange de tétraéthylorthosilicatetétraéthoxysilane (TEOS), d'éthanol absolu et d'une solution aqueuse de pH = 2,5 acidifiée à l'aide d'acide chlorhydrique, les rapports molaires respectifs des différents constituants du mélange étant 1 :4 :4. La solution contenant les nanoparticules de NaYF₄ : 20% Yb, 2 mol% Er³⁺ et de silice sol-gel est ensuite déposée par enduction (flow-coating) sur les lamelles d'un vitrage tel que celui décrit figure 1. Le film revêtement obtenu est ensuite séché à 100°C pendant 1 heure, puis recuit à 450°C pendant 3 heures. L'épaisseur du film obtenu est de 450 nm, sa transmission lumineuse étant supérieure à 80% sur l'ensemble du spectre visible. La partie infrarouge du spectre solaire est alors absorbée et convertie en rayonnement visible, cette dernière étant redirigée vers l'intérieur du bâtiment.

## Revendications

1. Equipement d'ouverture (1) de mur (2), ledit équipement comprenant un plan général de constitution destiné à être parallèle ou à se confondre avec le plan du mur, comprenant un moyen de déviation (3) déviant la lumière traversant ledit équipement et ladite ouverture en direction d'un plafond situé du côté de la lumière émergente, ladite lumière étant dite incidente (6) avant la traversée de l'équipement et de l'ouverture et ladite lumière étant dite émergente (7) après la traversée de l'équipement et de l'ouverture, **caractérisé en ce qu'**il comprend un matériau (5) de conversion de l'énergie lumineuse convertissant de la lumière non-visible en lumière visible, pour que dans la lumière émergente, à de la lumière originellement déjà dans le visible et traversant l'équipement et l'ouverture vienne s'ajouter de la lumière qui n'était pas visible mais qui l'est devenue sous l'effet du matériau de conversion.

2. Equipement selon la revendication précédente, **caractérisé en ce que** le moyen de déviation dévie la lumière par réflexion ou diffraction.

3. Equipement selon l'une des revendications précédentes, **caractérisé en ce qu'**il comprend un vitrage comprenant au moins une feuille transparente (7).

4. Equipement selon la revendication précédente **caractérisé en ce que** la feuille est en verre.

5. Equipement selon la revendication précédente **caractérisé en ce que** la feuille de verre est revêtue du matériau (8) de conversion de l'énergie lumineuse.

6. Equipement selon l'une des revendications précédentes, **caractérisé en ce que** la lumière atteint le matériau (8) de conversion de l'énergie lumineuse avant d'atteindre le moyen (9) de déviation.

7. Equipement selon l'une des revendications précédentes, **caractérisé en ce que** le moyen de déviation est un ensemble de lamelles (3) horizontales parallèles.

8. Equipement selon l'une des revendications précédentes, **caractérisé en ce que** le moyen de déviation est un ensemble de lamelles (3) horizontales parallèles et **en ce que** lesdites lamelles comprennent le matériau de conversion de l'énergie lumineuse sous forme d'un revêtement (5) en surface des lamelles.

9. Equipement selon l'une des revendications 1 à 6, **caractérisé en ce que** le moyen de déviation est un réseau de diffraction.

10. Equipement selon la revendication précédente, **caractérisé en ce que** le matériau de conversion est placé sur la face extérieure d'une feuille de verre et **en ce que** le réseau de diffraction est placé sur la face intérieure de la même feuille de verre.

11. Equipement selon la revendication 9 **caractérisé en ce qu'**il comprend plusieurs feuilles de verre parallèles dont une première comprend le matériau de conversion et dont une seconde comprend le réseau de diffraction, la première étant placée avant la seconde sur le trajet de la lumière.

12. Equipement selon la revendication 9 **caractérisé en ce que** le matériau constituant le réseau de diffraction de lumière contient également le matériau de conversion de la lumière.

13. Equipement selon l'une des revendications 3 à 5, **caractérisé en ce que** le moyen de déviation est constitué par des interfaces parallèles séparant différent morceaux de la feuille transparente.

14. Equipement selon l'une des revendications 1 à 3, **caractérisé en ce qu'**il comprend un vitrage comprenant au moins une feuille de vitrocéramique comprenant le matériau de conversion.

15. Equipement selon la revendication précédente, **caractérisé en ce que** le moyen de déviation est constitué par des interfaces (13) parallèles séparant différent morceaux de la feuille de vitrocéramique.

16. Equipement selon l'une des revendications précédentes, **caractérisé en ce que** le matériau de conversion transforme de l'infra-rouge vers le visible.

17. Equipement selon l'une des revendications précédentes, **caractérisé en ce que** le matériau de conversion transforme de l'ultra-violet vers le visible.

18. Equipement selon l'une des revendications précédentes, **caractérisé en ce qu'**il comprend un vitrage comprenant au moins une feuille de verre revêtue d'une couche à action photocatalytique (33) en contact avec l'air ambiant.

19. Equipement selon la revendication précédente, **caractérisé en ce qu'**il comprend un matériau de conversion de l'énergie lumineuse intensifiant celle-ci dans l'ultra-violet.

20. Bâtiment comprenant une ouverture équipée d'un équipement selon l'une des revendications précédentes.

21. Procédé pour dévier la lumière traversant une ouverture de mur, **caractérisé en ce que** l'ouverture est muni d'un équipement de l'une des revendications d'équipement précédentes.

22. Procédé selon la revendication précédente, **caractérisé en ce que** la lumière est déviée par ledit équipement vers le plafond de l'intérieur d'un bâtiment.

## Patentansprüche

1. Einrichtung einer Öffnung (1) einer Mauer (2), wobei die Einrichtung eine Gesamtbildungsebene umfasst, die dazu bestimmt ist, zu der Ebene der Mauer parallel zu sein oder mit dieser zu verschmelzen, umfassend ein Ablenkmittel (3), das das die Einrichtung und die Öffnung durchquerende Licht in Richtung einer auf der Seite des austretenden Lichts gelegenen Decke ablenkt, wobei das Licht vor Durchqueren der Einrichtung und der Öffnung sogenanntes einfallendes Licht (6) ist und wobei das Licht nach Durchqueren der Einrichtung und der Öffnung sogenanntes austretendes Licht (7) ist, **dadurch gekennzeichnet, dass** sie ein Material (5) zur Umwandlung der Lichtenergie umfasst, das nicht sichtbares Licht in sichtbares Licht umwandelt, damit in dem austretenden Licht zu Licht, das ursprünglich bereits im Sichtbaren ist und das die Einrichtung und die Öffnung durchquert, Licht hinzukommt, das nicht sichtbar war, das es aber unter der Wirkung des Umwandlungsmaterials wurde.

2. Einrichtung nach dem vorhergehenden Anspruch, **dadurch gekennzeichnet, dass** das Ablenkmittel das Licht durch Reflexion oder Beugung ablenkt.

3. Einrichtung nach einem der vorhergehenden Ansprüche, **dadurch gekennzeichnet, dass** sie eine Verglasung mit wenigstens einer transparenten Scheibe (7) umfasst.

4. Einrichtung nach dem vorhergehenden Anspruch, **dadurch gekennzeichnet, dass** die Scheibe aus Glas ist.

5. Einrichtung nach dem vorhergehenden Anspruch, **dadurch gekennzeichnet, dass** die Glasscheibe mit dem Material (8) zur Umwandlung der Lichtenergie überzogen ist.

6. Einrichtung nach einem der vorhergehenden Ansprüche, **dadurch gekennzeichnet, dass** das Licht das Material (8) zur Umwandlung der Lichtenergie erreicht, bevor es das Ablenkmittel (9) erreicht.

7. Einrichtung nach einem der vorhergehenden Ansprüche, **dadurch gekennzeichnet, dass** das Ablenkmittel eine Anordnung von parallelen horizontalen Lamellen (3) ist.

8. Einrichtung nach einem der vorhergehenden Ansprüche, **dadurch gekennzeichnet, dass** das Ablenkmittel eine Anordnung von parallelen horizontalen Lamellen (3) ist und dass die Lamellen das Material zur Umwandlung der Lichtenergie in Form einer Beschichtung (5) an der Oberfläche der Lamellen umfassen.

9. Einrichtung nach einem der Ansprüche 1 bis 6, **dadurch gekennzeichnet, dass** das Ablenkmittel ein Beugungsnetz ist.

10. Einrichtung nach dem vorhergehenden Anspruch, **dadurch gekennzeichnet, dass** das Umwandlungsmaterial auf der Außenseite einer Glasscheibe angeordnet ist und dass das Beugungsnetz auf der Innenseite der gleichen Glasscheibe angeordnet ist.

11. Einrichtung nach Anspruch 9, **dadurch gekennzeichnet, dass** sie mehrere parallele Glasscheiben umfasst, von denen eine erste das Umwandlungsmaterial umfasst und von denen eine zweite das Beugungsnetz umfasst, wobei die erste auf dem Weg des Lichts vor der zweiten angeordnet ist.

12. Einrichtung nach Anspruch 9, **dadurch gekennzeichnet, dass** das das Lichtbeugungsnetz bildende Material auch das Material zur Umwandlung des Lichts enthält.

13. Einrichtung nach einem der Ansprüche 3 bis 5, **dadurch gekennzeichnet, dass** das Ablenkmittel durch parallele Schnittstellen, die unterschiedliche Stücke der transparenten Scheibe trennen, gebildet ist.

14. Einrichtung nach einem der Ansprüche 1 bis 3, **dadurch gekennzeichnet, dass** sie eine Verglasung mit wenigstens einer das Umwandlungsmaterial umfassenden Glaskeramikscheibe umfasst.

15. Einrichtung nach dem vorhergehenden Anspruch, **dadurch gekennzeichnet, dass** das Ablenkmittel durch parallele Schnittstellen (13), die unterschiedliche Stücke der Glaskeramikscheibe trennen, gebildet ist.

16. Einrichtung nach einem der vorhergehenden Ansprüche, **dadurch gekennzeichnet, dass** das Umwandlungsmaterial Infrarot zu Sichtbarem umwandelt.

17. Einrichtung nach einem der vorhergehenden Ansprüche, **dadurch gekennzeichnet, dass** das Umwandlungsmaterial Ultraviolett zu Sichtbarem umwandelt.

18. Einrichtung nach einem der vorhergehenden Ansprüche, **dadurch gekennzeichnet, dass** sie eine Verglasung mit wenigstens einer Glasscheibe, die mit einer mit der Umgebungsluft in Kontakt befindlichen Schicht mit photokatalytischer Wirkung (33) überzogen ist, umfasst.

19. Einrichtung nach dem vorhergehenden Anspruch, **dadurch gekennzeichnet, dass** sie ein Material zur Umwandlung der Lichtenergie umfasst, das diese im Ultravioletten verstärkt.

20. Gebäude, umfassend eine Öffnung, die mit einer Einrichtung nach einem der vorhergehenden Ansprüche ausgestattet ist.

21. Verfahren zum Ablenken des eine Maueröffnung durchquerenden Lichts, **dadurch gekennzeichnet, dass** die Öffnung mit einer Einrichtung aus einem der vorhergehenden Einrichtungsansprüche ausgestattet ist.

22. Verfahren nach dem vorhergehenden Anspruch, **dadurch gekennzeichnet, dass** das Licht durch die Einrichtung in Richtung der Decke des Innenraums eines Gebäudes abgelenkt wird.

## Claims

1. Equipment (1) for a wall (2) opening comprising a general constitution plane being designed to be parallel to or to be coincident with the plane of the wall, comprising a deflection means (3) deflecting the light passing through said equipment and said opening toward a ceiling located on the side of the emergent light, said light being called incident (6) before passing through the equipment and the opening and said light being called emergent (7) after passing through the equipment and the opening, **characterized in that** it comprises a conversion material (5) for converting light energy, converting non-visible light into visible light, so that in the emergent light, at the light originally already in the visible passing through the equipment and the opening has added light that was not visible but that becomes so under the effect of the conversion material.

2. Equipment as claimed in the preceding claim, **characterized in that** the deflection means deflect the light by reflection or diffraction.

3. Equipment as claimed in in one of the preceding claims, **characterized in that** it comprises glazing comprising at least one transparent sheet.

4. Equipment as claimed in the preceding claim, **characterized in that** the sheet is made of glass.

5. Equipment as claimed in the preceding claim, **characterized in that** the glass sheet is coated with the material converting light energy.

6. Equipment as claimed in one of the preceding claims, **characterized in that** light reaches the material converting light energy before reaching the deflecting means.

7. Equipment as claimed in one of the preceding claims, **characterized in that** the deflecting means is an assembly of parallel horizontal slats.

8. Equipment as claimed in one of the preceding claims, **characterized in that** the deflecting means is an assembly of parallel horizontal slats and **in that** said slats have the material for converting light in the form of a coating on the surface of the slats.

9. Equipment as claimed in one of claims 1 to 6, **characterized in that** the deflecting means is a diffraction grating.

10. Equipment as claimed in the preceding claim, **characterized in that** the conversion material is placed on the outer face of a glass sheet and the diffraction grating is placed on the inner face of the same glass sheet.

11. Equipment as claimed in claim 9, **characterized in that** it comprises several parallel glass sheets of which a first one has the conversion material and of which a second one has the diffraction grating, the first being placed before the second in the path of the light.

12. Equipment as claimed in claim 9, **characterized in that** the material constituting the grating for diffracting light also contains the material for converting light.

13. Equipment as claimed in one of claims 3 to 5, **characterized in that** the deflecting means consists of parallel interfaces separating various portions of the transparent sheet.

14. Equipment as claimed in one of claims 1 to 3, **characterized in that** it comprises glazing having at least one glass-ceramic sheet having the conversion material.

15. Equipment as claimed in the preceding claim, **characterized in that** the deflecting means consists of parallel interfaces (13) separating various portions of the glass-ceramic sheet.

16. Equipment as claimed in one of the preceding claims, **characterized in that** the converting material converts infrared to the visible.

17. Equipment as claimed in one of the preceding claims, **characterized in that** the converting material converts ultraviolet to the visible.

18. Equipment as claimed in one of the preceding claims, **characterized in that** it comprises glazing having at least one glass sheet coated with a layer with a photocatalytic action in contact with the ambient air.

19. Equipment as claimed in the preceding claim, **characterized in that** it includes a material for converting light energy, intensifying this in the ultraviolet.

20. A building having an opening fitted with equipment as claimed in one of the preceding claims.

21. A method for deflecting light passing through a wall opening, **characterized in that** the opening is provided with an equipment of one of the preceding equipment claims.

22. The method as claimed in the preceding claim, **characterized in that** light is deflected by said equipment towards the ceiling inside a building.
